# EUROPEAN PATENT APPLICATION

(11) **EP 4 465 721 A1**
(43) Date of publication of application: **20.11.2024**
(21) Application number: 22920267.6
(22) Date of filing: 14.01.2022
(51) Int. Cl.: H04W 72/04

(54) **TERMINAL, COMMUNICATION SYSTEM, AND COMMUNICATION METHOD**

(71) Applicant: NTT DOCOMO, INC., Tokyo 100-6150 (JP)
(72) Inventor: OKAMURA, Masaya, Tokyo 100-6150 (JP); KUMAGAI, Shinya, Tokyo 100-6150 (JP); YOSHIOKA, Shohei, Tokyo 100-6150 (JP); TAKAHASHI, Yuki, Tokyo 100-6150 (JP); OKANO, Mayuko, Tokyo 100-6150 (JP)
(74) Representative: Hoffmann Eitle
(86) International application number: PCT/JP2022/001115
(87) International publication number: WO 2023/135742

(57) **Abstract**

Abstract : A terminal includes: a communication unit configured to perform communication with a base station that can perform transmission and reception using a same time and frequency resource based on configuration of an uplink resource and a downlink resource; and a control unit configured to control an operation of the communication unit based on a gap between a timing of uplink transmission performed in the uplink resource and a timing of downlink reception performed in the downlink resource.

## Description

### Technical Field

The present invention relates to a terminal, a communication system, and a communication method in a radio communication system.

### Background Art

New Radio (NR) (also referred to as "5G") which is a successor system of long term evolution (LTE) (also referred to as "4G") is known. In NR, a technology is used that satisfies requirements such as a large-capacity system, a high-speed data transmission rate, low delay, simultaneous connection of a large number of terminals, low cost, and power saving.

In 4G and 5G, both FDD (Frequency Division Duplex) and TDD (Time Division Duplex) can be used as duplex modes. In FDD, basically, DL communication and UL communication can be performed at arbitrary timings, and therefore, there is an advantage that delay is small, but there is a disadvantage that the ratio of the amount of resources between DL and UL is fixed.

On the other hand, in TDD, the ratio between the amount of DL resources and the amount of UL resources is variable, and therefore, there is the advantage that the amount of DL resources can be increased in a general environment where, for example, DL traffic is heavy. However, there is a disadvantage that the amount of UL resources decreases and the delay increases by increasing the amount of DL resources.

In recent years, studies on 5G advanced and 6G have been started in Japan and abroad, and further improvement in communication performances, diversification of use cases, and the like are assumed in 5G-advanced and 6G.

### Related Art Document

### Non-Patent Documents

Non-Patent Document 1: 3GPP TS 38.213 V16.7.0 (2021-09)
Non-Patent Document 2: 3GPP TS 38.331 V16.6.0 (2021-09)

### SUMMARY OF THE INVENTION

### Problems to be Solved by the Invention

For 5G-advanced and 6G, a communication scheme for reducing the disadvantages of FDD and TDD while incorporating the advantages of FDD and TDD is being studied. For example, a communication scheme is under study in which a base station performs both transmission and reception using the same time and frequency resource, and each terminal performs only unidirectional communication at the same time using an UL resource or a DL resource that is configured. However, in the existing technology, terminal operation in the foregoing communication scheme is not clear, and the terminal may not operate properly in the foregoing communication scheme.

The present invention has been made in view of the above, and an object of the present invention is to provide a technique that enables a terminal to operate properly in a communication scheme in which the terminal performs only unidirectional communication at the same time using an UL resource or a DL resource that is configured.

### Means for Solving the Problems

According to the disclosed technique, there is provided a terminal including:
a communication unit configured to perform communication with a base station that can perform transmission and reception using a same time and frequency resource based on configuration of an uplink resource and a downlink resource; and
a control unit configured to control an operation of the communication unit based on a gap between a timing of uplink transmission performed in the uplink resource and a timing of downlink reception performed in the downlink resource.

### Effects of the Invention

According to the disclosed technology, a technology is provided that enables a terminal to operate properly in a communication scheme in which the terminal performs only unidirectional communication at the same time using an UL resource or a DL resource that is configured.

### Brief Description of the Drawings

[Fig. 1] FIG. 1 is a diagram for explaining a radio communication system according to an embodiment of the present invention;
[Fig. 2] FIG. 2 is a diagram for explaining a radio communication system according to an embodiment of the present invention;
[Fig. 3] FIG. 3 is a diagram for explaining Opt. A-1;
[Fig. 4] FIG. 4 is a diagram for explaining Opt. B-1;
[Fig. 5] FIG. 5 is a diagram for explaining Opt. A-2;
[Fig. 6] FIG. 6 is a diagram for explaining Opt. B-2;
[Fig. 7] FIG. 7 is a diagram for explaining a resource configuration assumed in the embodiment of the present invention;
[Fig. 8] FIG. 8 is a diagram for explaining a basic operation example;
[Fig. 9] FIG. 9 is a diagram for explaining a comb type;
[Fig. 10] FIG. 10 is a diagram for explaining a second embodiment;
[Fig. 11] FIG. 11 is a diagram for explaining a second embodiment;
[Fig. 12] FIG. 12 is a diagram for explaining a third embodiment;
[Fig. 13] FIG. 13 is a diagram showing an example of a functional configuration of the base station 10 according to an embodiment of the present invention;
[Fig. 14] FIG. 14 is a diagram showing an example of a functional configuration of the terminal 20 according to an embodiment of the present invention;
[Fig. 15] FIG. 15 is a diagram showing an example of a hardware configuration of the base station 10 or the terminal 20 according to an embodiment of the present invention;
[Fig. 16] FIG. 16 is a diagram showing a configuration example of a vehicle.

### Detailed Description of the Invention

Hereinafter, an embodiment of the present invention will be described with reference to the drawings. The embodiment described below is an example, and the embodiment to which the present invention is applied is not limited to the following embodiment.

In the operation of the radio communication system according to the embodiment of the present invention, existing techniques are used as appropriate. The existing technology is, for example, existing NR (e.g., Non-Patent Documents 1 and 2). The radio communication system (the base station 10 and the terminal 20) according to the present embodiment can basically perform an operation according to an existing technical specification. However, in order to solve the problem, the base station 10 and the terminal 20 also perform operations that are not included in the existing technical specification. In the description of embodiments described later, operations and the like that are not in the existing technical specifications are mainly described. Note that the numerical values described below are all examples.

In the embodiment of the present invention, "configuring" a radio parameter or the like may mean that a predetermined value is pre-configured or that a radio parameter notified from the base station 10 or the terminal 20 is configured.

### (System configuration example)

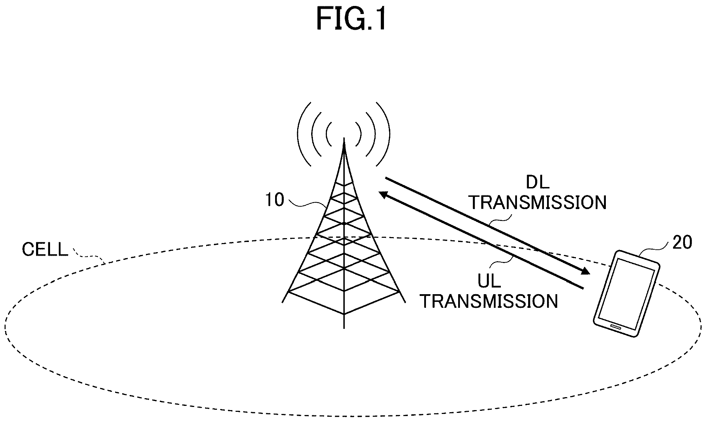

FIG. 1 is a diagram for explaining a radio communication system according to an embodiment of the present invention. As shown in FIG. 1, the radio communication system according to the embodiment of the present invention includes a base station 10 and a terminal 20. Although one base station 10 and one terminal 20 are illustrated in FIG. 1, this is merely an example, and a plurality of base stations 10 and a plurality of terminals 20 may be provided.

The base station 10 is a communication apparatus that provides one or more cells and performs radio communication with the terminal 20. The physical resources of the radio signal are defined in the time domain and the frequency domain.

OFDM is used as a radio access scheme. In the frequency-domain, at least 15 kHz, 30 kHz, 120 kHz, and 240 kHz are supported as subcarrier spacing (SCS). In the present embodiment, a larger SCS may be supported. Further, a resource block is formed with a predetermined number (for example, 12) of consecutive subcarriers regardless of SCS.

When performing initial access to a cell, for example, the terminal 20 detects SSB (SS/PBCH block), and identifies SCS for PDCCH, PDSCH, PUCCH, or the like, for example, based on PBCH included in the SSB.

In the time domain, a slot is formed with a plurality of OFDM symbols (for example, 14 symbols regardless of the subcarrier spacing). Hereinafter, an OFDM symbol is referred to as a "symbol". A slot is a scheduling unit. Further, a subframe of a 1 ms section is defined, and a frame including 10 subframes is defined. The number of symbols per slot is not limited to 14. Further, as a frame, a frame having a definition different from the frame having the above-described definition may be used.

As illustrated in FIG. 1, the base station 10 transmits control information or data to the terminal 20 in downlink (DL), and receives control information or data from the terminal 20 in uplink (UL). Both the base station 10 and the terminal 20 can transmit and receive signals by performing beamforming. In addition, both the base station 10 and the terminal 20 can apply communication by multiple input multiple output (MIMO) to DL or UL. In addition, both the base station 10 and the terminal 20 may perform communication via a secondary cell (SCell) and a primary cell (PCell) by carrier aggregation (CA).

The base station 10 according to the present embodiment can perform transmission and reception using the same time and frequency resource. That is, the base station 10 has a full-duplex function.

The terminal 20 is a communication apparatus having a radio communication function, such as a smartphone, a mobile phone, a tablet, a wearable terminal, and a machine-to-machine (M2M) communication module. As illustrated in FIG. 1, the terminal 20 receives control information or data from the base station 10 in DL and transmits control information or data to the base station 10 in UL, thereby using various communication services provided by the radio communication system.

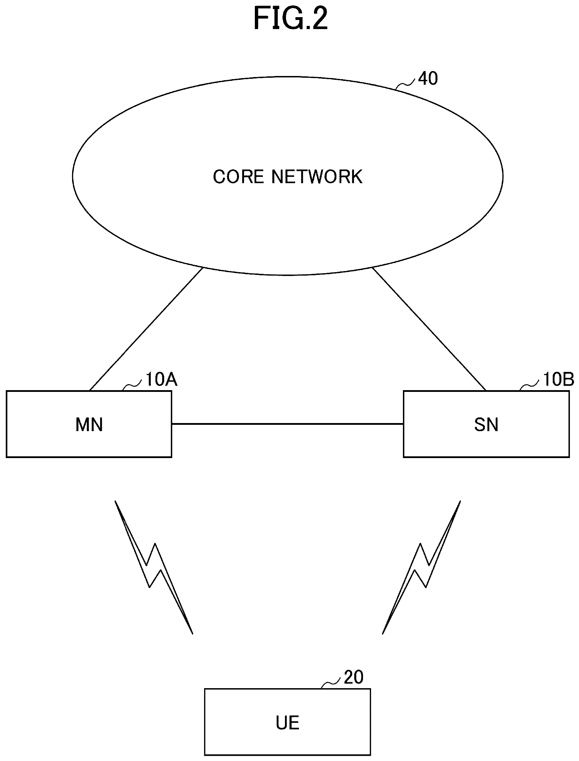

FIG. 2 illustrates a configuration example of a radio communication system in a case where DC (NR-Dual connectivity, for example) is executed. As shown in FIG. 2, the base stations 10A and 10B are provided as a master node (MN) and a secondary node (SN), respectively. The base stations 10A and 10B are connected to a core network. The terminal 20 communicate with both the base stations 10A and 10B.

A cell group provided by the base station 10A serving as the MN is referred to as a master cell group (MCG), and a cell group provided by the base station 10B serving as the SN is referred to as a secondary cell group (SCG). A PCell in a secondary cell group (SCG) may be referred to as a PSCell. The operation in this embodiment may be performed in either of the configurations shown in FIGS. 1 and 2. Also, the DC may be NR-NR DC, NR-LTE DC, or DC other than these.

Furthermore, in DC, a case where CCs are multiplexed between a plurality of base stations to perform transmission and reception may also be referred to as "carrier aggregation". In addition, in the present application, the CC and the cell may be treated as the same meaning.

In the radio communication system according to the present embodiment, when an unlicensed band is used, LBT (Listen Before Talk) is executed. The base station 10 or the terminal 20 performs transmission when the LBT result indicates "idle", and does not perform transmission when the LBT result indicates "busy".

### (Duplex Scheme)

Introduction/study situations of duplex schemes in 4G, 5G, 6G, and the like will be described. In 4G, a system has been put into practical use by mainly using FDD, and also 4G supports TDD. In 5G, TDD is mainly studied, and FDD is also supported at the same time. For example, migration of an LTE band of FDD to 5G is performed.

In FDD, DL and UL communications can be performed simultaneously, and therefore there is an advantage that delay can be reduced. However, FDD has a disadvantage that the resource ratio between DL and UL is fixed (e.g., 1:1).

In TDD, the amount of resources for DL and UL can be easily changed, which is a merit. For example, in a general environment with a large DL traffic amount, by increasing DL time resources, DL throughput can be improved. However, in TDD, since UL time resources decrease by increasing DL time resources, there is a possibility that delay performance deterioration and UL coverage deterioration occur.

In order to eliminate these disadvantages of FDD and TDD while taking advantage of both FDD and TDD, cross division duplex (XDD) and full duplex (FD) are being studied for 5G-advanced/6G.

XDD refers to simultaneous transmission and reception on the same time and adjacent frequency resources in a base station/terminal. Here, "base station/terminal" means "a base station, or a terminal, or both a base station and a terminal."

FD is to perform transmission and reception simultaneously in the same frequency and time resources in a base station/terminal.

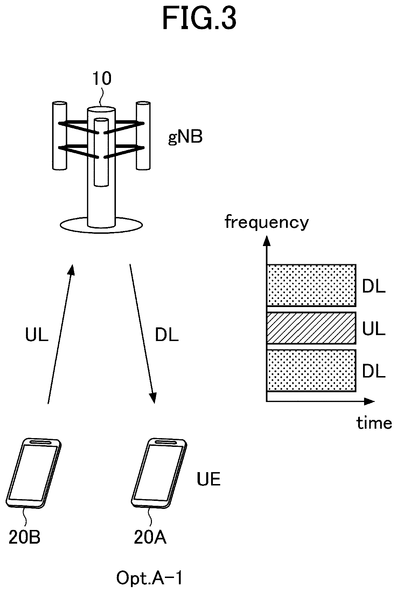

System configuration examples in FD, Opt. A-1, Opt. A-2, Opt. B-1, and Opt. B-2, will be explained with reference to FIGs. 3 to 6. Opt. A-1, Opt. A-2, Opt. B-1, and Opt. B-2 are examples of system configurations classified based on the allocation of UL and DL frequency resources and the support capability of FD by a base station (gNB)/terminal (UE).

Opt. A-1/B-1 is a system in which frequency resources do not overlap between DL and UL, and may be referred to as subband based FD. Opt. A-2/B-2 is a system in which frequency resources overlap between DL and UL, and may be referred to as spectrum sharing FD. Hereinafter, each of Opt. A-1, Opt. A-2, Opt. B-1, and Opt. B-2 will be described. In each of the drawings for explaining these, the left side of the drawing shows UL and DL communications between the base station 10 and the terminal 20, and the right side of the drawing shows allocation of UL and DL frequency resources.

FIG. 3 shows an example of the system configuration in Opt. A-1. As shown in FIG. 3, frequency resources are divided between DL and UL. In addition, only one-way communication is assumed at the same time in the same terminal. FIG. 3 shows that terminals 20B and 20A perform UL communication and DL communication, respectively, at the same time. In Opt. A-1, information indicating which frequency resource is DL or UL at which time is configured for each system. The system here is a system including the base station 10 and the terminal 20.

Opt. A-1 is different from FDD in that DL-only or UL-only is available in Opt. A-1 and that there is a gap between bands.

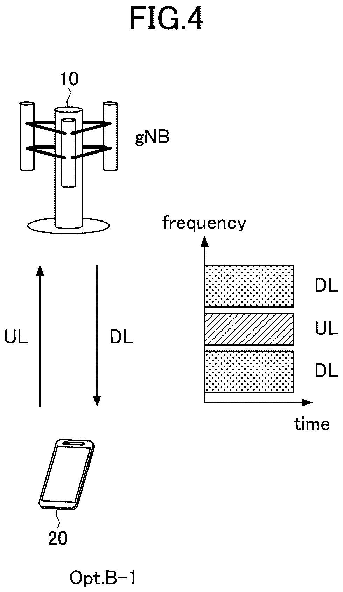

FIG. 4 shows an example of the system configuration of Opt. B-1. As shown in FIG. 4, frequency resources are divided between DL and UL. Bidirectional communication at the same time is assumed in the same terminal. In Opt. B-1, information indicating which frequency resource is DL or UL at which time is configured for each system. However, a resource pattern can be configured for the terminal based on a restriction of the terminal to be accommodated.

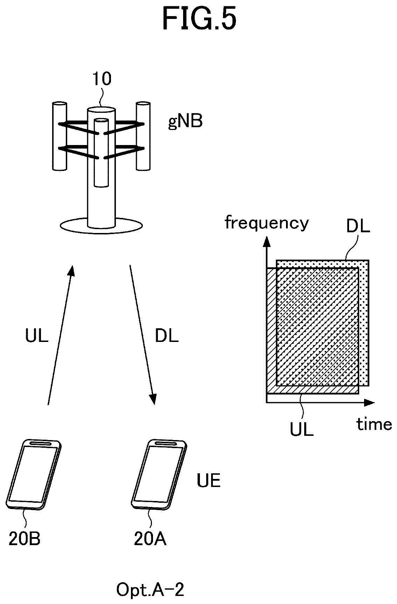

FIG. 5 shows an example of the system configuration in Opt. A-2. As shown in FIG. 5, frequency resources overlap between DL and UL. However, only one-way communication is assumed at the same time in the same terminal. In Opt. A-2, information indicating which frequency resource is DL or UL at which time is configured for each system or each terminal. However, by clarifying the operation at the time of collision, information (which may be referred to as a pattern) indicating which frequency resource is DL or UL at which time may not be configured.

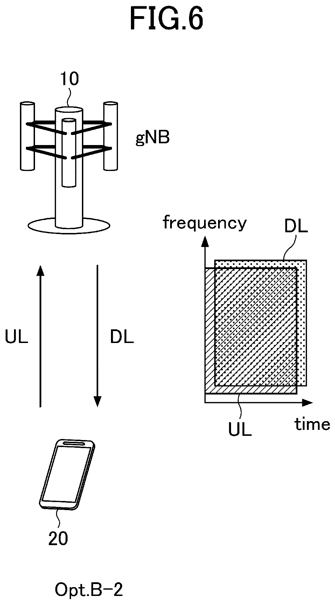

FIG. 6 shows an example of the system configuration of Opt. B-2. As shown in FIG. 6, frequency resources overlap between DL and UL. Bidirectional communication at the same time is assumed in the same terminal. In Opt. B-2, information indicating which frequency resource is DL or UL at which time may be configured for each system or each terminal, or information indicating which frequency resource is DL or UL at which time may not be configured.

### (System Configuration Assumed in Present Embodiment)

In this embodiment (including first to third embodiments described later), Opt. A-2 shown in Fig.5 is assumed to be used. However, the application of the technology in this embodiment is not limited to Opt. A-2. The technology in this embodiment may also be applied to a system of other options.

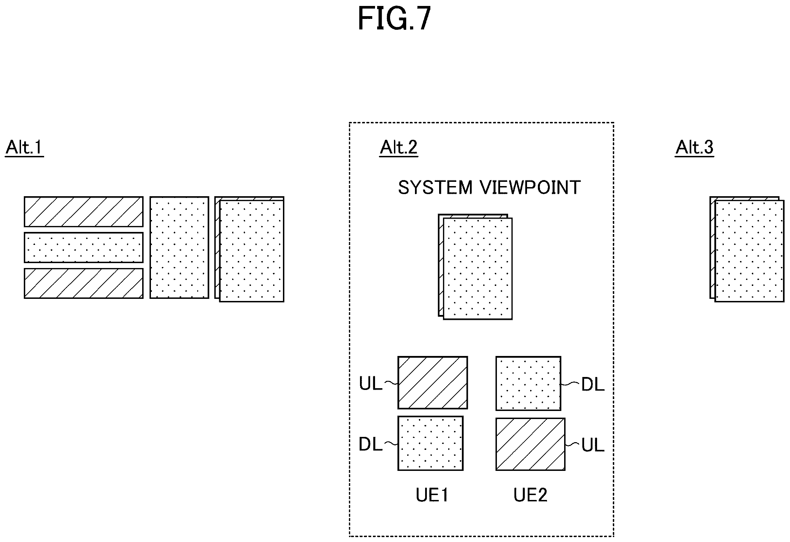

As described with reference to FIG. 5, in Opt. A-2, from a system perspective (from a perspective of the whole including the base station and the terminal), frequency resources overlap between DL and UL, but the same terminal performs only unidirectional communication at the same time. In the base station, bidirectional communication at the same time is assumed. As for allocation of frequency resources in Opt. A-2, for example, there are Alt. 1, Alt. 2, and Alt. 3 as shown in FIG. 7.

In Alt. 1, the resource pattern is configured in a cell-specific manner in the system, assuming that DL/UL overlap, DL/UL partial overlap and no overlap are mixed in the time direction. In Alt. 2, which frequency resource is to be used for DL/UL is configured on a terminal-by-terminal basis. In Alt. 3, there is no pattern configuration, and the base station and the terminal assume that DL/UL are fully overlapped.

In this embodiment, Alt. 2 shown in FIG. 7 is assumed. However, the application of the technology in this embodiment is not limited to Alt. 2, and the technology in this embodiment may also be applied to other Alts.

### (Problem)

In the present embodiment, a case of Opt. A-2 (Alt. 2) is assumed in which DL and UL frequency resources are configured for each terminal on a terminal-by-terminal basis. Opt. A-2 (Alt. 2) has a problem that the following (1) to (3) are not clear.

(1) UE capability required to support Opt. A-2 (Alt. 2)
(2) Terminal operation for avoiding DL-UL collision
(3) Terminal operation in DL-UL collision

In the present embodiment, operations clarifying the above (1) to (3) will be described.

### (Basic Operation of Embodiment)

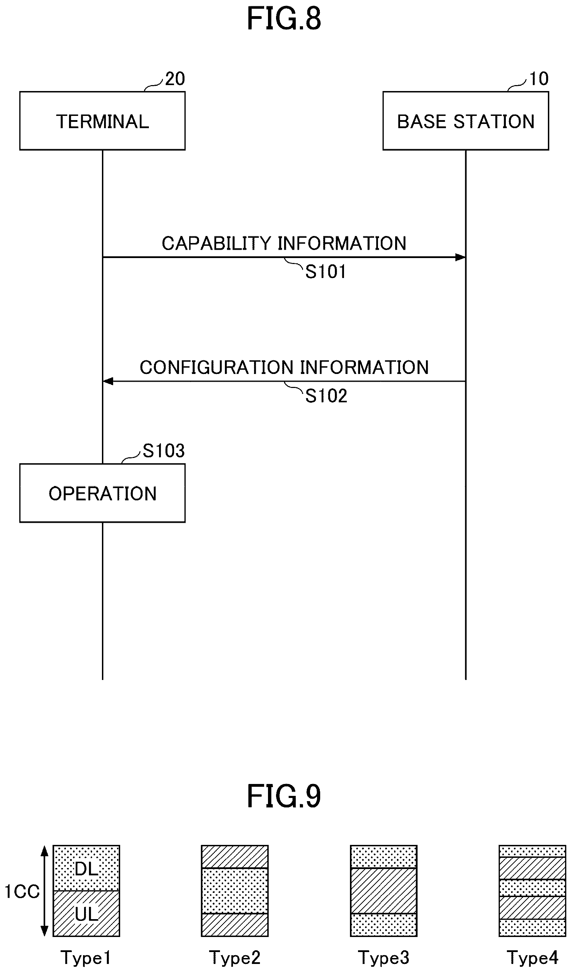

An example of the basic operation of the base station 10 and the terminal 20 according to the present embodiment will be described with reference to FIG. 8.

As described above, in the present embodiment (including the first embodiment to the third embodiment), Alt. 2 of FIG. 7 is assumed, and frequency resources do not overlap between UL and DL, between the terminals. Each terminal performs unidirectional communication at the same time. That is, each terminal performs only UL transmission at a certain time and performs only DL reception at another time. Which frequency resource is UL or DL is configured in advance for each terminal.

Further, the operation of Opt. A-2 (Alt. 2) as described above may be referred to as "XDD". The operation of Opt. A-2 (Alt. 2) may be referred to as "FD". That is, "XDD" in the following description may be replaced with "FD".

In the following description, "CH/Sig" means "a channel, a signal, or both a channel and a signal". In this specification, expressions such as "transmit CH/Sig", "receive CH/Sig", and "drop CH/Sig" are used. Here, "transmitting a channel" may be rephrased as "transmitting data (or information or a signal) using a channel". In addition, "receiving a channel" may be rephrased as "receiving data (or information or a signal) using a channel". Further, "dropping a channel" may be rephrased as "not performing data (or information or signal) transmission using a channel".

In S101 of FIG. 8, the terminal 20 transmits capability information (UE capability) to the base station 10. The capability information transmitted in S101 is, for example, capability information described in a first embodiment described later.

In S102, the base station 10 transmits configuration information to the terminal 20. The configuration information includes, for example, information indicating that "XDD is performed in the cell in which the terminal 20 is present" and information indicating UL and DL frequency resources.

The transmission of the configuration information from the base station 10 to the terminal 20 may be expressed as "XDD is configured".

In S103, the terminal 20 performs an operation based on the configuration information. In S103, for example, operations described in a second embodiment and a third embodiment to be described later are performed.

In addition, the terminal 20 does not assume reception of a CH/Sig in a frequency resource outside the DL frequency resources configured at the time of configuration of XDD. In addition, the terminal 20 does not assume transmission of a CH/Sig in a frequency resource outside the UL frequency resources configured at the time of configuration of XDD.

However, the terminal 20 may perform measurement of a reference signal, a synchronization signal, or the like in a frequency resource outside the configured DL frequency resources. The terminal 20 may report the measurement result to the base station 10, and the base station 10 may configure a DL frequency resource (referred to as a new DL frequency resource) different from the already configured DL frequency resources for the terminal 20. After receiving this configuration, the terminal 20 performs DL reception using the new DL frequency resource.

Hereinafter, a first embodiment, a second embodiment, and a third embodiment will be described as embodiments corresponding to the above-described problems (1), (2), and (3). The first embodiment, the second embodiment, and the third embodiment can be implemented in any combination.

### (First Embodiment)

First, the first embodiment will be described. In the first embodiment, an example of UE capability transmitted from the terminal 20 to the base station 10 in S101 of FIG. 8 will be described. In the following description, reporting to the base station 10 may be rephrased as "reporting to a network (NW)".

### <UE capability regarding resources>

For example, the terminal 20 reports, to the base station 10, UE capability regarding resources (e.g., S101 of FIG. 8) indicated by the base station 10 when XDD is configured in the terminal 20 by the base station 10 (e.g., S102 of FIG. 8). The resources are UL and DL frequency resources used by the terminal 20 in XDD. However, the resources may include a time resource (information of a time domain).

Examples (1) to (4) of the information related to the resources included in the UE capability reported from the terminal 20 to the base station 10 are shown below. Any two or more of (1) to (4) may be combined.

### (1) Resource granularity (either or both of frequency granularity and time granularity)

The frequency granularity of resources is, for example, resource block (RB), BWP, or MHz. The time granularity of resources is, for example, slot, subframe, frame, µ second, m (milli) second, or the like.

In a case where the terminal 20 notifies the base station 10 of "RB" as a resource granularity, the base station 10 designates, for example, RB #0 to #50 as DL and designates RB #51 to #100 as UL for the terminal 20.

In a case where the terminal 20 notifies the base station 10 of "RB" and "frame" as a resource granularity, the base station 10 designates, for example, "RB #0 to #50=DL and RB #51 to #100=UL in even-numbered frames" and "RB #0 to #50=UL and RB #51 to #100=DL in odd-numbered frames" to the terminal 20.

### (2) Maximum number of DL-UL multiplexing

The maximum number of DL-UL multiplexing is, for example, the maximum number of DL-UL multiplexing per CC (component carrier).For example, when the terminal 20 notifies the base stations 10 that 4 is the maximum number of DL-UL multiplexing per CC (for example, the bandwidth is 100HMz), the base station 10 specifies, for example, "0 to 25MHz=UL, 25MHz to 50MHz=DL, 50 to 75MHz=UL, 25MHz to 100MHz=DL" to the terminals 20.

### (3) Minimum number of PRBs

The minimum number of PRBs may be common to UL and DL, or the minimum number of PRBs may be reported for each of UL and DL. For example, when the terminal 20 reports 20 as the minimum number of PRBs common to UL and DL to the base station 10, the base station 10 designates, for example, UL resources equal to or greater than 20 RBs and DL resources equal to or greater than 20 RBs.

### (4) Comb type

The base station 10 may configure, to the terminal 20, frequency resources of UL and DL in a form in which UL and DL are alternately multiplexed in a comb-tooth shape. A type in which UL frequency resources and DL frequency resources are alternately multiplexed in a comb-tooth shape is referred to as a Comb type. The terminal 20 reports one or more Comb types supported by the terminal 20 to the base station 10. The base station 10 configures, for example, one Comb type among one or more Comb types supported by the terminal 20 for the terminal 20.

Note that a Comb type may be defined in units of CCs, a Comb type may be defined in each of FR1/FR2-1/FR2-2, or a Comb type may be defined in each of frequency widths other than these.

As an example of a Comb type in which a CC is used as a unit, FIG. 9 illustrates Types 1 to 4. It should be noted that for units other than CC, Types 1 to 4 shown in FIG. 9 may also be defined. Types 1 to 4 shown in FIG. 9 are examples. For instance, four Comb types with UL and DL reversed from those shown in Types 1 to 4 in FIG. 9 may also be defined.

### <Allowable gap between DL Rx and UL Tx: Related to Second Embodiment>

The terminal 20 may report, to the base station 10, a time gap between a DL reception timing and an UL transmission timing, which is necessary for normal operation in the terminal 20, as the UE capability. This gap is referred to as "allowable gap between DL Rx and UL Tx". The gap will be described in detail in a second embodiment related to a collision avoidance operation between UL and DL in the terminal 20. The gap corresponds to INT_dl_ul_gap in the second embodiment.

Additionally, the terminal 20 may report to the base station 10 the maximum value of the allowable gap (INT_dl_ul_gap_diffBeam in the second embodiment) assumed when a DL reception beam (DL Rx beam) and an UL transmission beam (UL Tx beam) are different, and the maximum value of the allowable gap (INT_dl_ul_gap_sameBeam in the second embodiment) assumed when a DL reception beam (DL Rx beam) and an UL transmission beam (UL Tx beam) are the same. At this time, the maximum value of the allowable gap (INT_dl_ul_gap_diffBeam in the second embodiment) and the maximum value of the allowable gap (INT_dl_ul_gap_sameBeam in the second embodiment) may be reported in the same information element or in separate information elements.

### <Granularity of Drop: Related to Third Embodiment>

The terminal 20 may report information indicating a granularity when dropping a CH/Sig having a low priority to the base station 10 as UE capability. The granularity of reporting is, for example, a symbol unit, a slot unit, a subframe unit, or the like. The details of dropping the CH/Sig having a low priority will be described in the third embodiment.

### <Simultaneous Transmission and Reception>

The terminal 20 may report information indicating whether or not DL reception and UL transmission can be performed simultaneously to the base station 10 as UE capability. When the terminal 20 reports to the base station 10 that DL reception and UL transmission can be performed simultaneously, operations of the second embodiment and the third embodiment described later may not be performed.

Further, only when the terminal 20 reports to the base station 10 that the terminal 20 cannot perform DL reception and UL transmission at the same time, operations of the second embodiment and the third embodiment described later may be performed.

In the second embodiment and the third embodiment described later, it is assumed that the terminal 20 cannot perform DL reception and UL transmission at the same time regardless of reporting of the UE capability. However, even when the terminal 20 has a capability of simultaneously performing DL reception and UL transmission, the terminal 20 may perform operations of the second embodiment and the third embodiment to be described later.

### <Effects of First Embodiment>

According to the first embodiment described above, the terminal 20 can perform XDD operation according to the terminal capability.

### (Second Embodiment)

Next, the second embodiment will be described. As described above, the terminal 20 according to the present embodiment cannot simultaneously perform UL transmission and DL reception, and thus it is necessary to avoid overlapping between a resource for performing UL transmission and a resource for performing DL reception. In the second embodiment, the terminal 20 avoids collision between UL and DL by providing a gap between DL reception and UL transmission.

The minimum value of the gap may be referred to as an "allowable gap between DL Rx and UL Tx". The "allowable gap between DL Rx and UL Tx" is represented as INT_dl_ul_gap, for example. The time unit of INT_dl_ul_gap may be a symbol, *µ* second, n second, or other units.

The minimum value of the gap is a value at which the terminal 20 cannot normally perform switching from UL to DL or switching from DL to UL in a gap narrower than the minimum value.

In the second embodiment, for example, in S102 of FIG. 8, a value of the "allowable gap between DL Rx and UL Tx" is configured from the base station 10 to the terminal 20, and the terminal 20 and the base station 10 operate according to the configured value. Alternatively, the value of the "allowable gap between DL Rx and UL Tx" may be defined in a technical specification, and the terminal 20 and the base station 10 may operate in accordance with the technical specification. Note that, in the following, for convenience of description, the "allowable gap between DL Rx and UL Tx" may be referred to as an "allowable gap".

### <Transmission and reception operation example 1>

The terminal 20 performs reception of DL CH/Sig and transmission of UL CH/Sig with a gap that is equal to or greater than the allowable gap value.

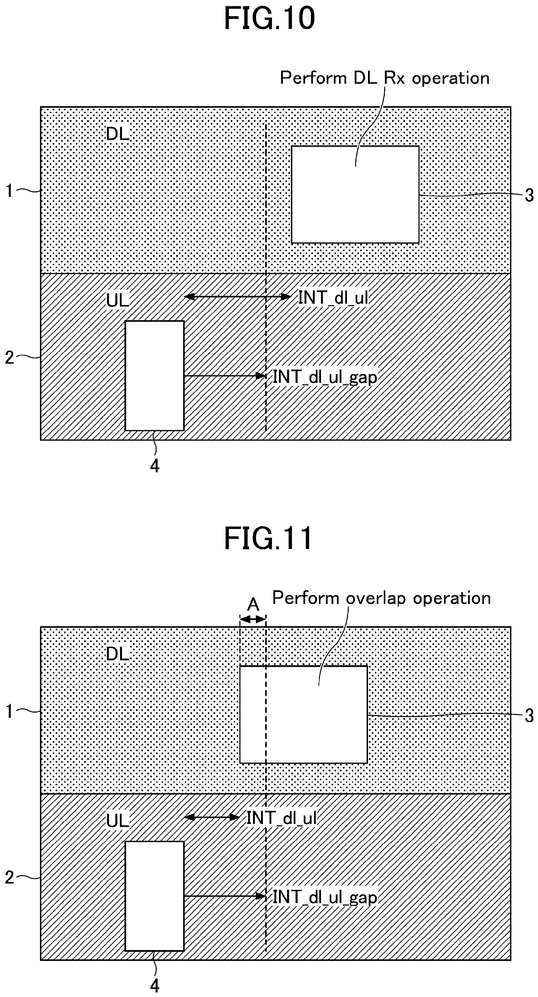

An operation example of the terminal 20 will be described with reference to FIG. 10. As shown in FIG. 10, DL resource 3 for performing DL reception operation is included in DL resource 1 that is configured in the terminal 20 in advance, and UL resource 4 for performing UL transmission operation is included in UL resource 2 that is configured in the terminal 20 in advance.

As illustrated in FIG. 10, after the terminal 20 transmits the UL CH/Sig by using the UL resource 4, the terminal 20 receives the DL CH/Sig by using the DL resource 3 after INT_dl_ul larger than the allowable gap (INT_dl_ul_gap).

In the example of FIG. 10, DL reception is performed after UL transmission, but this is only an example. UL transmission may be performed after DL reception.

Additionally, the UL resource 4 shown in FIG. 10 may be a resource autonomously selected by the terminal 20 from the UL resource 2, a predefined resource for CH/Sig transmission, or a resource allocated by the base station 10. Similarly, the DL resource 3 shown in FIG. 10 may be a resource autonomously selected by the terminal 20 from the DL resource 1, a predefined resource for CH/Sig reception, or a resource allocated by the base station 10.

For example, when both the UL resource 4 and the DL resource 3 are resources allocated from the base station 10, the terminal 20 may assume that the allocation is performed so that a gap (INT_dl_ul) larger than INT_dl_ul_gap is obtained.

Additionally, for example, if either or both of the UL resource 4 and the DL resource 3 are predefined, periodically occurring resources, the terminal 20 may select a timing such that the gap (INT_dl_ul) is larger than INT_dl_ul_gap, and perform transmission and reception using the UL resource 4 and the DL resource 3.

In the example shown in FIG. 10 (and similarly in other figures), the gap (INT_dl_ul) between the DL CH/Sig reception timing and the UL CH/Sig transmission timing is defined as the gap between the end of the UL CH/Sig transmission resource and the beginning of the DL CH/Sig reception resource. However, this is just one example. For instance, the gap (INT_dl_ul) between the DL CH/Sig reception timing and the UL CH/Sig transmission timing may be the gap between the center of the UL CH/Sig transmission resource and the center of the DL CH/Sig reception resource.

### <Transmission and reception operation example 2>

If the terminal 20 determines that the gap between the DL CH/Sig reception timing and the UL CH/Sig transmission timing is less than (or equal to) the allowable gap value, it performs the operation described in the third embodiment mentioned later. Note that the situation where the gap between the DL CH/Sig reception timing and the UL CH/Sig transmission timing is less than (or equal to) the allowable gap value can be described as a collision between DL and UL (UL-DL collision).

The gap between the DL CH/Sig reception timing and the UL CH/Sig transmission timing being less than (or equal to) the allowable gap value includes the case where there is no gap. In other words, the gap between the DL CH/Sig reception timing and the UL CH/Sig transmission timing being less than (or equal to) the allowable gap value includes a case where there is an overlap in the time domain between the DL resource for DL CH/Sig reception and the UL resource for UL CH/Sig transmission.

An operation example of the terminal 20 will be described with reference to FIG. 11. As shown in FIG. 11, the DL resource 3 for performing DL reception operation is included in the DL resource 1 that is configured in the terminal 20 in advance, and the UL resource 4 for performing UL transmission operation is included in the UL resource 2 that is configured in the terminal 20 in advance.

As shown in FIG. 11, the gap (INT_dl_ul) between the UL resource 4 and the DL resource 3 is smaller than the allowable gap (INT_dl_ul_gap). When the terminal 20 determines that the gap (INT_dl_ul) is smaller than the allowable gap (INT_dl_ul_gap), the terminal 20 performs the operation of the third embodiment.

The UL resource 4 illustrated in FIG. 11 may be a resource autonomously selected from the UL resource 2 by the terminal 20, may be a resource defined in advance for CH/Sig transmission, or may be a resource allocated from the base station 10. Further, the DL resource 3 illustrated in FIG. 11 may be a resource autonomously selected from the DL resource 1 by the terminal 20, may be a resource defined in advance for CH/Sig reception, or may be a resource allocated from the base station 10.

For example, when both the UL resource 4 and the DL resource 3 are resources allocated by the base station 10 via configuration information or control information, the terminal 20 can determine from this configuration or control information whether the gap (INT_dl_ul) is smaller than the allowable gap (INT_dl_ul_gap).

Additionally, for example, when either or both of the UL resource 4 and the DL resource 3 are predefined, periodically occurring resources, the terminal 20 can determine that the gap (INT_dl_ul) is smaller than the allowable gap (INT_dl_ul_gap) at a timing where the gap (INT_dl_ul) is smaller than the allowable gap (INT_dl_ul_gap), and execute the operation of the third embodiment.

### < Transmission and reception operation example 3>

When a DL reception beam (DL Rx beam) and an UL transmission beam (UL Tx beam) are the same for the terminal 20 (e.g., when "beam correspondence" in NR is established), INT_dl_ul_gap may be assumed to be 0. In this case, the terminal 20 can perform DL reception immediately after performing UL transmission, or perform UL transmission immediately after performing DL reception.

The terminal 20 may assume that two or more gaps are configured or indicated by the base station 10. Here, the configuration may be performed by RRC, and the indication may be performed by DCI or MAC CE.

For example, when a DL reception beam (DL Rx beam) and an UL transmission beam (UL Tx beam) are the same for the terminal 20, the base station 10 configures or indicates INT_dl_ul_gap_sameBeam to the terminal 20. Also, for example, when the DL reception beam (DL Rx beam) and the UL transmission beam (UL Tx beam) are different for the terminal 20, the base station 10 configures or indicates INT_dl_ul_gap_diffBeam to the terminal 20.

Here, INT_dl_ul_gap_sameBeam may be 0. Also, INT_dl_ul_gap_diffBeam is greater than INT_dl_ul_gap_sameBeam. However, INT_dl_ul_gap_diffBeam is not limited to being greater than INT_dl_ul_gap_sameBeam.

For example, when a DL reception beam (DL Rx beam) and an UL transmission beam (UL Tx beam) in the terminal 20 are the same, the terminal 20 can switch between DL and UL without switching the direction of the beam, and thus INT_dl_ul_gap_sameBeam can be set to be smaller than INT_dl_ul_gap_diffBeam.

In the transmission and reception operation example 3, the terminal 20 autonomously determines each of the DL reception beam and the UL transmission beam based on a measurement result of a DL signal and the like, and notifies the base station 10 of information of the determined DL reception beam and information of the determined UL transmission beam. Accordingly, the base station 10 can configure/indicate INT_dl_ul_gap_diffBea, INT_dl_ul_gap_sameBeam, etc. to the terminal 20.

In addition, the base station 10 may determine each of a DL reception beam and an UL transmission beam in the terminal 20 based on an UL signal or the like received from the terminal 20 and notify the terminal 20 of information of the determined DL reception beam and information of the determined UL transmission beam.

Also, the terminal 20 may autonomously determine an UL transmission beam based on a measurement result of a DL signal and the like and notify the base station 10 of information of the determined UL transmission beam. The base station 10 may determine a DL reception beam in the terminal 20 based on an UL signal or the like received from the terminal 20 and notify the terminal 20 of information on the determined DL reception beam.

Note that each of the information of the DL reception beam and the information of the UL transmission beam notified from the base station 10 to the terminal 20 (or notified from the terminal 20 to the base station 10) may be an index of a signal (example: SSB, CSI-RS, SRS) transmitted by the beam.

### <Effect of second embodiment>

According to the second embodiment, the terminal 20 can appropriately avoid DL-UL collision.

### (Third Embodiment)

Next, the third embodiment will be described. As described in the transmission and reception operation example 2 of the second embodiment, when the terminal 20 determines that the gap between the DL CH/Sig reception timing and the UL CH/Sig transmission timing is less than the value of the allowable gap (or equal to or less than the value of the allowable gap), the terminal 20 performs the operation of the third embodiment. That is, the third embodiment is an embodiment related to an operation when the DL-UL collision occurs.

Basically, the terminal 20 drops a CH/Sig having a lower priority between a CH/Sig of DL and a CH/Sig of UL, which are determined to have a collision, according to a priority of the CH/Sig between DL and UL. The operation will be described in more detail below.

### <Operation example 1 for priority>

In the third embodiment, the terminal 20 may assume that a priority of the CH/Sig between DL and UL is configured by the base station 10. For example, in S102 of FIG. 8, the terminal 20 receives the priority of the CH/Sig between DL and UL as configuration information by RRC. In addition, the priority of the CH/Sig between DL and UL may indicated to the terminal 20 from the base station 10 by MAC-CE or DCI.

In any case of RRC/MAC-CE/DCI, the priority of the CH/Sig between DL and UL may be indicated by a priority indicator.

Alternatively, the priority of the CH/Sig between DL and UL may be defined by the technical specification, and the terminal 20 and the base station 10 may operate according to the technical specification.

The priority of the CH/Sig between DL and UL may be configured/indicated/defined for each CH/Sig, or a certain rule may be configured/ indicated/defined, and the terminal 20 (and the base station 10) may determine the priority of the CH/Sig between DL and UL according to the rule.

When the rule is used, for example, the terminal 20 always prioritizes a CH/Sig scheduled (or defined or configured) earlier (or later) in time among the CH/Sig of DL and the CH/Sig of UL in which the collision occurs.

Further, a CH/Sig to be always prioritized among the CH/Sig of DL and the CH/Sig of UL in which the collision occurs may be configured/indicated/specified. For example, a PDCCH in DL may always be prioritized over the CH/Sig in UL. Also, for example, SSB may always be prioritized over the CH/Sig of UL.

Furthermore, regardless of the type of CH/Sig, it may be configured/indicated/specified that UL is prioritized over DL (or DL is prioritized over UL).

Also, dynamic PDSCH/PUSCH (PDSCH/PUSCH scheduled by a PDCCH) may always be given priority over semi-static PUSCH/PDSCH (CG PUSCH/SPS).

### <Operation example 2 for priority>

The terminal 20 may determine the priority of the CH/Sig between DL and UL based on a value of a parameter of a resource configured or scheduled by the base station 10. Hereinafter, (1) to (3) will be described as examples.

### (1) Example based on configuration

The terminal 20 prioritizes a CH/Sig to be transmitted/received in a resource having a larger (or smaller) frequency bandwidth among an UL resource and a DL resource configured by the base station 10 for the operation of XDD.

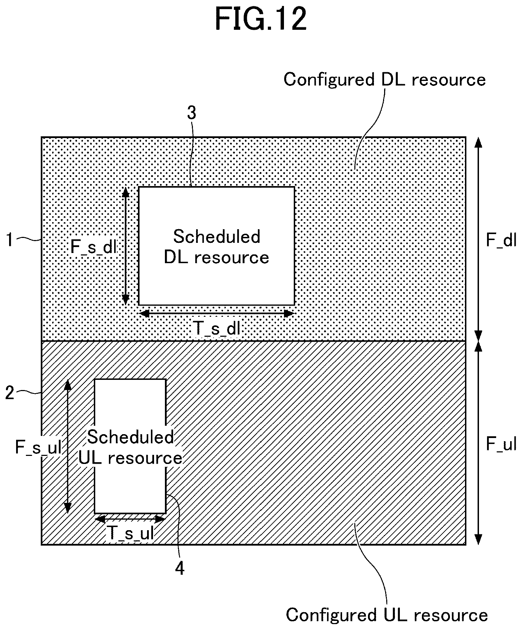

An example is explained with reference to FIG. 12. As shown in FIG. 12, DL resource 1 with a frequency bandwidth of F dl and UL resource 2 with a frequency bandwidth of F_ul are configured for the terminal 20.

Here, it is assumed that a CH/Sig to be transmitted/received in a resource having a larger frequency bandwidth is prioritized. In this case, when the terminal 20 determines that F_dl>F_ul holds true, the terminal 20 prioritizes the CH/Sig received in the DL resource 1 over a CH/Sig transmitted in the UL resource 2. Further, when the terminal 20 determines that F_dl<F_ul holds true, the terminal prioritizes the CH/Sig transmitted in the UL resource 2 over the CH/Sig received in the DL resource 1.

### (2) Example 1 based on scheduling

Here, both the CH/Sig of DL and the CH/Sig of UL are assumed to be received/transmitted using resource scheduled by the base station 10.

The terminal 20 prioritizes a CH/Sig having a larger (or smaller) number of PRBs of the resources scheduled by the base station 10, among a CH/Sig of DL and a CH/Sig of UL in which collision has occurred.

An example will be described with reference to FIG. 12. As shown in FIG. 12, DL resource 3 having a frequency bandwidth (the number of PRBs) of F s dl is scheduled for a CH/Sig of DL, and UL resource 4 having a frequency bandwidth (the number of PRBs) of F_s_ul is scheduled for a CH/Sig of UL.

Here, a CH/Sig with a larger number of PRBs is prioritized. In this case, when the terminal 20 determines that F s dl>F s ul holds true, the terminal prioritizes a CH/Sig received by the DL resource 3 over a CH/Sig transmitted by the UL resource 4. Further, when the terminal 20 determines that F s dl<F s ul holds true, the terminal 20 prioritizes a CH/Sig transmitted by the UL resource 4 over a CH/Sig received by the DL resource 3.

### (3) Example 2 based on scheduling

Here, it is assumed that both the CH/Sig of DL and the CH/Sig of UL are assumed to be received/transmitted using resources scheduled by the base station 10.

The terminal 20 prioritizes a CH/Sig having a longer (or shorter) time length of a resource scheduled from the base station 10, among a CH/Sig of DL and a CH/Sig of UL in which collision has occurred.

An example will be described with reference to FIG. 12. As shown in FIG. 12, DL resource 3 having a time length of T_s_dl is scheduled for a CH / Sig of DL, and UL resource 4 having a time length of T_s_ul is scheduled for a CH/Sig of UL.

Here, a CH/Sig having a longer time length is prioritized. In this case, when the terminal 20 determines that T _s_dl>T_s_ul holds true, the terminal 20 prioritizes a CH/Sig received by the DL resource 3 over a CH/Sig transmitted by the UL resource 4. Further, when the terminal 20 determines that T s dl<T s ul holds true, the terminal 20 prioritizes a CH/Sig transmitted by the UL resource 4 over a CH/Sig received by the DL resource 3.

### <Operation example for dropping>

When the UL-DL collision occurs and the terminal 20 needs to drop a lower priority CH/Sig, the terminal 20 may perform one of the following options, Opt. 1 to Opt. 4. One of these options, Opt. 1 to Opt. 4, may be configured by the base station 10 to the terminal 20. Additionally, different options for each CH/Sig may be configured by the base station 10 to the terminal 20.

An overlap resource described below is, for example, an overlap portion between a CH/Sig resource of DL and a CH/Sig resource of UL. Further, the overlap resource may be a resource in a time domain obtained by subtracting an actual gap (INT_dl_ul) from the allowed gap (INT_dl_ul_gap) as illustrated in A of FIG. 11.

### [Opt.1]

The terminal 20 drops only a symbol of an overlap resource between DL and DL in a CH/Sig with a low priority.

For example, when the priority of DL is lower between a resource (symbols #0 to #10) of a CH/Sig of DL and a resource (symbols #0 to #3) of a CH/Sig of UL, the terminal 20 drops symbols #0 to #3 in the resource of the CH/Sig of DL. That is, in symbols #0 to #3, the terminal 20 does not perform reception of the CH/Sig of DL.

### [Opt.2]

The terminal 20 drops a slot in which an overlap resource between DL and UL exists in a CH/Sig with a low priority.

For example, when the priority of DL is lower between a CH/Sig resource of DL (symbol #0 of slot 1 to symbol #10 of slot 2) and a CH/Sig resource of UL (symbols #0 to #3 of slot 1), the terminal 20 drops slot 1 in the CH/Sig resource of DL. That is, the terminal 20 does not perform reception of the CH/Sig of DL in slot 1.

### [Opt.3]

The terminal 20 drops a subframe in which an overlap resource between DL and UL exists in a CH/Sig having a low priority.

For example, when the priority of DL is lower between a resource of a CH/Sig of DL (slots 1 and 2 of subframe 1) and a resource of a CH/Sig of UL (slot 1 of subframe 1), the terminal 20 drops subframe 1 of the resource of the CH/Sig of DL. That is, in subframe 1, the terminal does not perform reception of the CH/Sig of DL.

### [Opt.4]

The terminal 20 drops a resource in which an overlap resource between DL and UL exists in a CH/Sig having a low priority.

For example, when the priority of DL is lower between a resource (symbols #0 to #10) of a CH/Sig of DL and a resource (symbols #0 to #3) of a CH/Sig of UL, the terminal 20 drops symbols #0 to #10 which is a resource of the CH/Sig of DL. That is, the terminal does not perform reception of the CH/Sig of DL in symbols #0 to #10.

### <Retransmission operation example for dropping>

When a dropped CH/Sig is a DL CH/Sig, the terminal 20 may request the base station 10 to retransmit the dropped CH/Sig.

The terminal 20 may assume a resource in which the CH/Sig is retransmitted by the unit of dropping (the above-described options). For example, when the above-mentioned Opt. 1 is configured, the terminal 20 may assume that only a dropped symbol is retransmitted from the base station 10.

Specifically, for example, when the terminal 20 drops symbols #0 to #3 of a CH/Sig resource of DL and requests the base station 10 to retransmit the CH/Sig, the base station 10 retransmits information of the portion of the symbols #0 to #3 of the CH/Sig.

### <Effects of third embodiment>

According to the third embodiment, when a DL-UL collision occurs, the terminal 20 can appropriately determine a CH/Sig to be prioritized.

### (Other examples)

Next, an example common to all the embodiments will be described.

"CC (Component Carrier)" can be replaced with "PFL (Positioning Frequency Layer)" or "Positioning Component Carrier." Similarly, "XDD (Cross Division Duplex)" can be replaced with "HD (Half Duplex)" or similar terms.

Additionally, "configured by RRC" can be replaced with "updated (activated/deactivated) by MAC-CE," "indicated (triggered) by DCI," or similar terms. Similarly, "drop" can be replaced with "puncture" or similar terms.

Additionally, "UE (User Equipment)" can be replaced with "UT (User Terminal)," "Node," "User node," or similar terms. Similarly, "NW" can be replaced with "gNB," "LMF (Location Manager Function)," or similar terms. Furthermore, "slot" can be replaced with "sub-slot" or similar terms.

### (Apparatus Configuration)

Next, functional configuration examples of the base station 10 and the terminal 20 that execute the processes and operations described above will be described.

### <Base station 10>

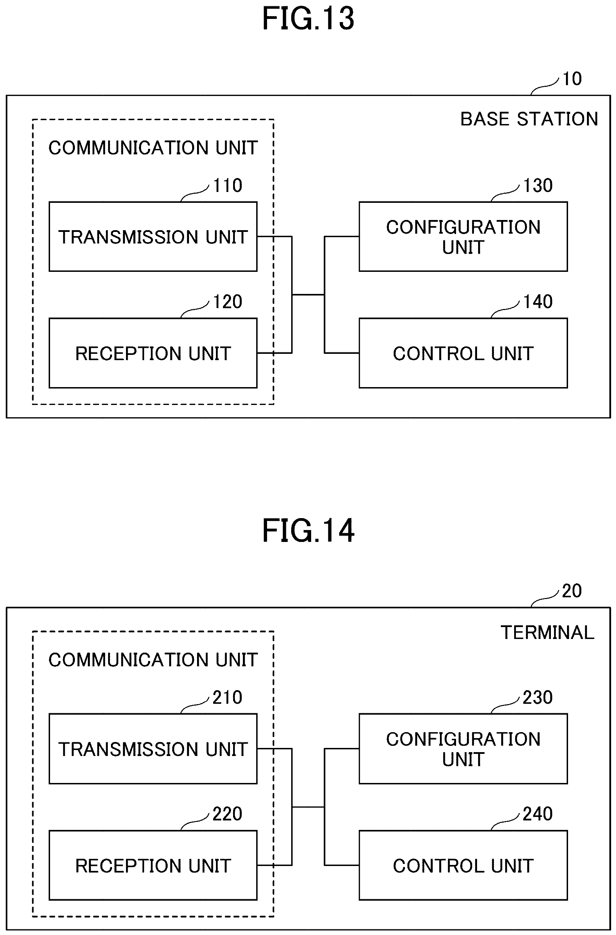

FIG. 13 is a diagram illustrating an example of a functional configuration of the base station 10. As illustrated in FIG. 13, the base station 10 includes a transmission unit 110, a reception unit 120, a configuration unit 130, and a control unit 140. The functional configuration shown in FIG. 12 is merely an example. The functional sections and the names of the functional units may be any as long as the operations according to the embodiment of the present invention can be executed. The transmission unit 110 and the reception unit 120 may be collectively referred to as a communication unit.

The transmission unit 110 includes a function of generating a signal to be transmitted to the terminal 20 side and transmitting the signal by radio. The reception unit 120 includes a function of receiving various signals transmitted from the terminal 20 and acquiring, for example, information of a higher layer from the received signal. The transmission unit 110 has a function of transmitting NR-PSS, NR-SSS, NR-PBCH, DL/UL control signal, DCI by PDCCH, data by PDSCH, and the like to the terminal 20.

The configuration unit 130 stores configuration information set in advance and various kinds of configuration information to be transmitted to the terminal 20 in a storage device included in the configuration unit 130, and reads the configuration information from the storage device as necessary.

The control unit 140 performs scheduling of DL reception or UL transmission of the terminal 20 via the transmission unit 110. The control unit 140 also includes a function of performing LBT. The functional unit related to signal transmission in the control unit 140 may be included in the transmission unit 110, and the functional unit related to signal reception in the control unit 140 may be included in the reception unit 120. The transmission unit 110 may be referred to as a transmitter, and the reception unit 120 may be referred to as a receiver. The control unit 140 may be referred to as a processor.

### <Terminal 20>

FIG. 14 is a diagram illustrating an example of a functional configuration of the terminal 20. As illustrated in FIG. 14, the terminal 20 includes a transmission unit 210, a reception unit 220, a configuration unit 230, and a control unit 240. The functional configuration shown in FIG. 11 is merely an example. The functional sections and the names of the functional units may be any as long as the operations according to the embodiment of the present invention can be executed. The transmission unit 210 and the reception unit 220 may be collectively referred to as a communication unit.

The transmission unit 210 creates a transmission signal from the transmission data and transmits the transmission signal by radio. The reception unit 220 receives various signals by radio and acquires a signal of a higher layer from the received signal of the physical layer. Also, the reception unit 220 has a function of receiving NR-PSS, NR-SSS, NR-PBCH, DL/UL/SL control signal, DCI by PDCCH, data by PDSCH and so on, transmitted from the base station 10. For example, the transmission unit 210 may transmit a physical sidelink control channel (PSCCH), a physical sidelink shared channel (PSSCH), a physical sidelink discovery channel (PSDCH), a physical sidelink broadcast channel (PSBCH), or the like to other terminals 20 as D2D communication, and the reception unit 120 may receive the PSCCH, the PSSCH, the PSDCH, the PSBCH, or the like from other terminals 20.

The configuration unit 230 stores various types of configuration information received from the base station 10 or another terminal by the reception unit 220 in a storage device included in the configuration unit 230, and reads the configuration information from the storage device as necessary. The configuration unit 230 also stores configuration information set in advance.

The control unit 240 controls the terminal 20. The control unit 240 can control communication operation performed by the communication unit. The functional unit related to signal transmission in the control unit 240 may be included in the transmission unit 210, and the functional unit related to signal reception in the control unit 240 may be included in the reception unit 220. The transmission unit 210 may be referred to as a transmitter, and the reception unit 220 may be referred to as a receiver. The control unit 240 may be referred to as a processor.

### <Supplementary Notes>

The present embodiment provides at least a terminal, a communication system, and a communication method described in the following items 1 to 6.

### (Item 1)

A terminal including:
a communication unit configured to perform communication with a base station that can perform transmission and reception using a same time and frequency resource based on configuration of an uplink resource and a downlink resource; and
a control unit configured to control an operation of the communication unit based on a gap between a timing of uplink transmission performed in the uplink resource and a timing of downlink reception performed in the downlink resource.

### (Item 2)

The terminal as described in item 1, wherein the communication unit
performs the uplink transmission and the downlink reception when the gap is greater than an allowable gap that is configured or defined, and
does not perform either one of the uplink transmission and the downlink reception when the gap is smaller than the allowable gap.

### (Item 3)

The terminal as described in item 2, wherein the communication unit does not perform one having a lower priority between the uplink transmission and the downlink reception when the gap is smaller than the allowable gap.

### (Item 4)

The terminal as described in any one of items 1 to 3, wherein the communication unit reports, to the base station, capability information on configuration of the uplink transmission and the downlink reception or capability information on the gap.

### (Item 5)

A communication system including:
a terminal including:
a communication unit configured to perform communication with a base station that can perform transmission and reception using a same time and frequency resource based on configuration of an uplink resource and a downlink resource; and
a control unit configured to control an operation of the communication unit based on a gap between a timing of uplink transmission performed in the uplink resource and a timing of downlink reception performed in the downlink resource, and
the base station including:
   a transmission unit configured to transmit, to the terminal, configuration information of the uplink resource and the downlink resource.

### (Item 6)

A communication method executed by a terminal, the communication method including:
performing communication with a base station that can perform transmission and reception using a same time and frequency resource based on configuration of an uplink resource and a downlink resource; and
controlling a communication operation of the communication unit based on a gap between a timing of uplink transmission performed in the uplink resource and a timing of downlink reception performed in the downlink resource.

Any of the items 1 to 6 provides a technique that enables a terminal to operate properly in a communication scheme in which the terminal performs only unidirectional communication at the same time by using a configured UL resource or DL resource. In particular, according to item 2, the terminal can properly avoid a DL-UL collision. According to item 3, when a DL-UL collision occurs, the terminal can properly determine a CH/Sig to be prioritized.

### (Hardware Configuration)

The block diagrams (FIGS. 13 and 14) used in the description of the embodiment described above illustrate the block of functional units. Such functional blocks (configuration parts) are attained by at least one arbitrary combination of hardware and software. In addition, an attainment method of each of the function blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions to transmit is referred to as the transmitting unit or the transmitter. As described above, the attainment method thereof is not particularly limited.

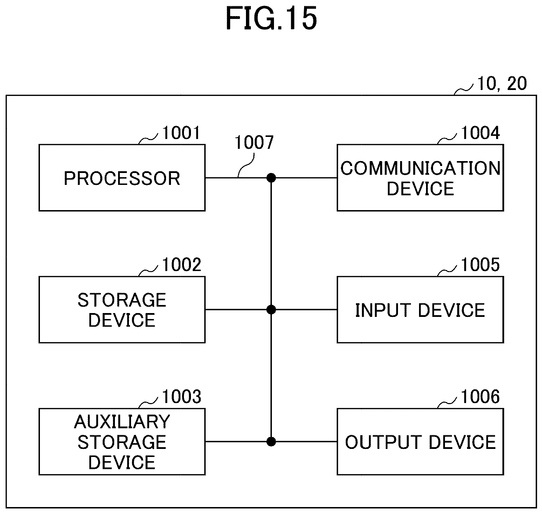

For example, the base station 10, the terminal 20 and the like in one embodiment of this disclosure may function as a computer for performing the processing of a radio communication method of this disclosure. FIG. 15 is a diagram illustrating an example of a hardware configuration of the base station 10 and the terminal 20 according to one embodiment of this disclosure. The base station 10 and the terminal 20 described above may be physically configured as a computer apparatus including a processor 1001, a storage device 1002, an auxiliary storage device 1003, a communication device 1004, an input device 1005, an output device 1006, a bus 1007, and the like.

Note that, in the following description, the word "apparatus" can be replaced with a circuit, a device, a unit, or the like. The hardware configuration of the base station 10 and the terminal 20 may be configured to include one or a plurality of apparatuses illustrated in the drawings, or may be configured not to include a part of the apparatuses.

Each function of the base station 10 and the terminal 20 is attained by reading predetermined software (a program) on hardware such as the processor 1001 and the storage device 1002 such that the processor 1001 performs an operation, and by controlling the communication of the communication device 1004 or by controlling at least one of reading and writing of data in the storage device 1002 and the auxiliary storage device 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage device 1002 from at least one of the auxiliary storage device 1003 and the communication device 1004, and thus, executes various processing. A program for allowing a computer to execute at least a part of the operation described in the embodiment described above is used as the program. The control unit 140 of the base station 10 shown in FIG. 13 may be attained by a control program that is stored in the storage device 1002 and is operated by the processor 1001. Also, for example, the control unit 240 of the terminal 20 shown in FIG. 14 may be attained by a control program that is stored in the storage device 1002 and is operated by the processor 1001. It has been described that the various processing described above are executed by one processor 1001, but the various processing may be simultaneously or sequentially executed by two or more processors 1001. The processor 1001 may be mounted on one or more chips. Note that, the program may be transmitted from a network through an electric communication line.

The storage device 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage unit), and the like. The storage device 1002 is capable of retaining a program (a program code), a software module, and the like that can be executed in order to implement a communication method according to one embodiment of this disclosure.

The auxiliary storage device 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disc), a smart card, a flash memory (for example, a card, a stick, a key drive), a floppy (Registered Trademark) disk, a magnetic strip, and the like. The storage medium described above, for example, may be a database including at least one of the storage device 1002 and the auxiliary storage device 1003, a server, and a suitable medium.

The communication device 1004 is hardware (a transmitting and receiving device) for performing communication with respect to the computer through at least one of a wired network and a radio network, and for example, is also referred to as a network device, a network controller, a network card, a communication module, and the like. The communication device 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication device 1004. In the transmitting and receiving unit, the transmitting unit and the receiving unit are mounted by being physically or logically separated.

The input device 1005 is an input device for receiving input from the outside (for example, a keyboard, a mouse, a microphone, a switch, a button, a sensor, and the like). The output device 1006 is an output device for implementing output with respect to the outside (for example, a display, a speaker, an LED lamp, and the like). Note that, the input device 1005 and the output device 1006 may be integrally configured (for example, a touch panel).

In addition, each of the apparatuses such as the processor 1001 and the storage device 1002 may be connected by the bus 1007 for performing communication with respect to information. The bus 1007 may be configured by using a single bus, or may be configured by using buses different for each of the apparatuses.

In addition, the base station 10 and the terminal 20 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

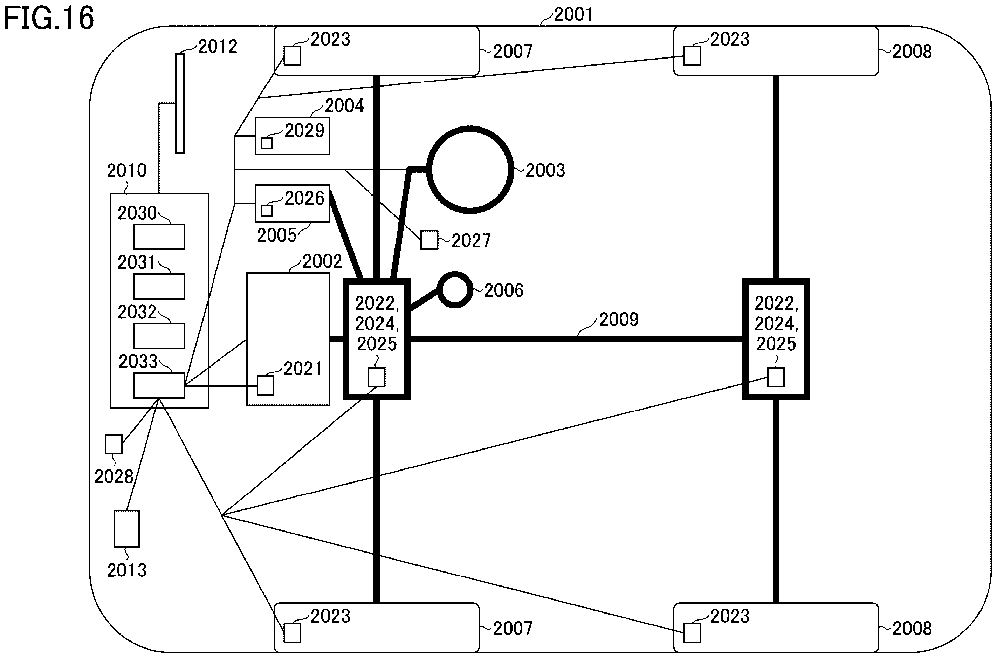

The terminal 20 or the base station may be provided in a vehicle 2001. FIG. 16 shows a configuration example of a vehicle 2001 according to the present embodiment. As shown in FIG. 15, the vehicle 2001 includes a drive unit 2002, a steering unit 2003, an accelerator pedal 2004, a brake pedal 2005, a shift lever 2006, front wheels 2007, rear wheels 2008, an axle 2009, an electronic control unit 2010, various sensors 2021-2029, an information service unit 2012, and a communication module 2013. Each aspect/embodiment described in the present disclosure may be applied to a communication apparatus mounted on the vehicle 2001, and may be applied to, for example, the communication module 2013. For example, the functions of the terminal 20 may be incorporated in the communication module 2013. Also, for example, the functions of the base station 10 may be incorporated in the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by the object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via the communication port 2033, to and from the drive unit 2002, the steering unit 2003, the accelerator pedal 2004, the brake pedal 2005, the shift lever 2006, the front wheels 2007, the rear wheels 2008, the axle 2009, the microprocessor 2031 and the memory (ROM, RAM) 2032 in the electronic control unit 2010, and sensors 2021-2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal, which is input to the electronic control unit 2010 from the current sensor, to the external devices through radio communication. In addition, the communication module 2013 also transmits, to the external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheels 2007, the rear wheels 2008, the axle 2009, the sensors 2021-2029, etc., mounted in the vehicle 2001.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the base station 10 and the terminal 20 have been described by using a functional block diagram, but such an apparatus may be attained by hardware, software, or a combination thereof. Each of software that is operated by a processor of the base station 10 according to the embodiment of the invention and software that is operated by a processor of the terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiments described in this disclosure may be applied to a system using long term evolution (LTE), LTE-advanced (LTE-A), SUPER 3G, IMT-advanced, 4th generation mobile communication system (4G), 5th generation mobile communication system (5G), future radio access (FRA), new radio (NR), W-CDMA (Registered Trademark), GSM (Registered Trademark), CDMA2000, ultra mobile broadband (UMB), IEEE 802.11 (Wi-Fi (Registered Trademark)), IEEE 802.16 (WiMAX (Registered Trademark)), IEEE 802.20, ultra-wideband (UWB), Bluetooth (Registered Trademark), and other suitable systems and a next-generation system that is expanded, modified, generated or defined on the basis thereof. In addition, a combination of a plurality of systems (for example, a combination of at least one of LTE and LTE-A and 5G, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the base station 10 may be performed by an upper node, in accordance with a case. In a network provided with one or a plurality of network nodes including the base station 10, it is obvious that various operations that are performed in order for communication with respect to the terminal 20 can be performed by at least one of the base station 10 and network nodes other than the base station 10 (for example, MME, S-GW, AMF, SMF, LMF or the like is considered as the network node, but the network node is not limited thereto). In the above description, a case is exemplified in which the number of network nodes other than the base station 10 is 1, but a plurality of other network nodes may be combined (for example, the MME and the S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), at least one of the wire technology and the radio technology is included in the definition of the transmission medium.

The information, the signal, and the like described in this disclosure may be represented by using any of various different technologies. For example, the data, the command, the information, the signal, the bit, the symbol, the chip, and the like that can be referred to through the entire description described above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding piece of information. For example, a radio resource may be indicated by an index.

The names used in the parameters described above are not a limited name in any respect. Further, expressions or the like using such parameters may be different from those explicitly disclosed in this disclosure. Various channels (for example, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macro-cell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH))). The term "cell" or "sector" indicates a part of the coverage area or the entire coverage area of at least one of the base station and the base station sub-system that perform the communication service in the coverage.

In this disclosure, the terms "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other suitable terms, by a person skilled in the art.

At least one of the base station and the mobile station may be referred to as a transmitting apparatus, a receiving apparatus, a communication apparatus, and the like. Note that, at least one of the base station and the mobile station may be a device that is mounted on a mobile object, the mobile object itself, or the like. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

In addition, the base station in this disclosure may be replaced with the user terminal. For example, each aspect/embodiment of this disclosure may be applied to a configuration in which communication between the base station and the user terminal is replaced with communication in a plurality of terminals 20 (for example, may be referred to as device-to-device (D2D), vehicle-to-everything (V2X), and the like). In this case, the function of the base station 10 described above may be provided in the terminal 20. In addition, the words "uplink", "downlink", and the like may be replaced with words corresponding to the communication between the terminals (for example, "side"). For example, an uplink channel, a downlink channel, and the like may be replaced with a side channel.

Similarly, the user terminal in this disclosure may be replaced with the base station. In this case, the function of the user terminal described above may be provided in the base station.

The terms "determining" used in this disclosure may involve diverse operations. "Determining", for example, may include deeming judging, calculating, computing, processing, deriving, investigating, looking up (search, inquiry) (for example, looking up in a table, a database, or another data structure), and ascertaining, as "determining". In addition, "determining" may include deeming receiving (for example, receiving information), transmitting (for example, transmitting information), input, output, and accessing (for example, accessing data in a memory), as "determining". In addition, "determining" may include deeming resolving, selecting, choosing, establishing, comparing, and the like as "determining". That is, "determining" may include deeming an operation as "determining". In addition, "determining" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical or logical, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some nonlimiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot based on a standard to be applied.

The description "based on" that is used in this disclosure does not indicate only "based on only", unless otherwise specified. In other words, the description "based on" indicates both "based on only" and "based on at least".

Any reference to elements using the designations "first," "second," and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or that the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be an exclusive-OR.

A radio frame may be configured of one or a plurality of frames in a time domain. Each of one or a plurality of frames in the time domain may be referred to as a subframe. The subframe may be further configured of one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, and the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time units greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time units at the time of transmitting a signal. Other names respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1 ms. Note that, a unit representing TTI may be referred to as a slot, a mini slot, and the like, but not a subframe. Also, one slot may be referred to as a unit time. The unit time may be diffident for each cell according to the numerology.

Here, TTI, for example, indicates a minimum time unit of scheduling in radio communication. For example, in an LTE system, the base station performs scheduling for allocating a radio resource (a frequency bandwidth, transmission power, and the like that can be used in each of the terminals 20) in TTI units, with respect to each of the terminals 20. Note that, the definition of TTI is not limited thereto.

TTI may be a transmission time unit of a data packet (a transport block), a code block, a codeword, and the like that are subjected to channel coding, or may be processing unit of scheduling, link adaptation, and the like. Note that, when TTI is applied, a time section (for example, the number of symbols) in which the transport block, the code block, the codeword, and the like are actually mapped may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a normal TTI (TTI in LTE Rel.8-12), a long TTI, a normal subframe, a long subframe, a slot, and the like. TTI shorter than the normal TTI may be referred to as a shortened TTI, a short TTI, a partial TTI (or a fractional TTI), a shortened subframe, a short subframe, a mini slot, a subslot, a slot, and the like.

Note that, the long TTI (for example, the normal TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is a resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined based on the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that, one or a plurality of RBs may be referred to as a physical resource block (physical RB: PRB), a subcarrier group (SCG), a resource element group (REG), a PRB pair, an RB pair, and the like.

In addition, the resource block may be configured of one or a plurality of resource elements (RE). For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP). In the terminal 20, one or a plurality of BWPs may be configured within one carrier.

At least one of the configured BWPs may be active, and it need not be assumed that the terminal 20 transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as a, an, and the are added by translation, this disclosure may include a case where nouns following the articles are plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

As described above, this disclosure has been described in detail, but it is obvious for a person skilled in the art that this disclosure is not limited to the embodiment described in this disclosure. This disclosure can be implemented as corrected and modified without departing from the spirit and scope of this disclosure defined by the description of the claims. Therefore, the description in this disclosure is for illustrative purposes and does not have any limiting meaning with respect to this disclosure.

### Description of Symbols

10 base station
110 transmission unit
120 reception unit
130 configuration unit
140 control unit
20 terminal
210 transmission unit
220 reception unit
230 configuration unit
240 control unit
1001 processor
1002 storage device
1003 auxiliary storage device
1004 communication device
1005 input device
1006 output device
2001 vehicle
2002 drive unit
2003 steering unit
2004 accelerator pedal
2005 brake pedal
2006 shift lever
2007 front wheels
2008 rear wheels
2009 axle
2010 electronic control unit
2012 information service unit
2013 communication module
2021 current sensor
2022 revolution sensor
2023 pneumatic sensor
2024 vehicle speed sensor
2025 acceleration sensor
2026 brake pedal sensor
2027 shift lever sensor
2028 object detection sensor
2029 accelerator pedal sensor
2030 driving support system unit
2031 microprocessor
2032 memory (ROM, RAM)
2033 communication port (IO port)

## Claims

1. A terminal comprising:
a communication unit configured to perform communication with a base station that can perform transmission and reception using a same time and frequency resource based on configuration of an uplink resource and a downlink resource; and
a control unit configured to control an operation of the communication unit based on a gap between a timing of uplink transmission performed in the uplink resource and a timing of downlink reception performed in the downlink resource.

2. The terminal as claimed in claim 1, wherein the communication unit
performs the uplink transmission and the downlink reception when the gap is greater than an allowable gap that is configured or defined, and
does not perform either one of the uplink transmission and the downlink reception when the gap is smaller than the allowable gap.

3. The terminal as claimed in claim 2, wherein the communication unit does not perform one having a lower priority between the uplink transmission and the downlink reception when the gap is smaller than the allowable gap.

4. The terminal as claimed in any one of claims 1 to 3, wherein the communication unit reports, to the base station, capability information on configuration of the uplink transmission and the downlink reception or capability information on the gap.

5. A communication system comprising:
a terminal comprising:
a communication unit configured to perform communication with a base station that can perform transmission and reception using a same time and frequency resource based on configuration of an uplink resource and a downlink resource; and
a control unit configured to control an operation of the communication unit based on a gap between a timing of uplink transmission performed in the uplink resource and a timing of downlink reception performed in the downlink resource, and
the base station comprising:
a transmission unit configured to transmit, to the terminal, configuration information of the uplink resource and the downlink resource.

6. A communication method executed by a terminal, the communication method comprising:
performing communication with a base station that can perform transmission and reception using a same time and frequency resource based on configuration of an uplink resource and a downlink resource; and
controlling a communication operation of the communication unit based on a gap between a timing of uplink transmission performed in the uplink resource and a timing of downlink reception performed in the downlink resource.
